# EUROPÄISCHE PATENTSCHRIFT

(11) **EP 1 836 420 B1**
(45) Veröffentlichungstag und Bekanntmachung des Hinweises auf die Patenterteilung: **25.02.2009**
(21) Anmeldenummer: 05850225.3
(22) Anmeldetag: 02.12.2005
(51) Int. Cl.: F16H 61/32

(54) **FAHRZEUGGETRIEBE MIT INTEGRIERTEM ELEKTROMOTOR**
VEHICLE GEARBOX WITH AN INTEGRATED ELECTRIC MOTOR
BOITE DE VITESSES DE VEHICULE A MOTEUR ELECTRIQUE INTEGRE

(30) Priorität: 13.01.2005 DE 102005001525
(43) Veröffentlichungstag der Anmeldung: 26.09.2007
(73) Patentinhaber: ZF Friedrichshafen AG, 88038 Friedrichshafen (DE)
(72) Erfinder: SCHEPPERLE, Bernd, 78464 Konstanz (DE); REMMLINGER, Hubert, 88046 Friedrichshafen (DE); KETTELER, Karl-Hermann, 88677 Markdorf (DE); HEINRICH, Kai, 88289 Waldburg (DE); FEULNER, Peter, 88048 Friedrichshafen (DE)
(86) Internationale Anmeldenummer: PCT/EP2005/012875
(87) Internationale Veröffentlichungsnummer: WO 2006/074756

(56) Entgegenhaltungen:
- EP-A- 1 191 260
- EP-A- 1 323 956
- DE-A1- 10 344 106

## Beschreibung

Die Erfindung betrifft ein elektromechanisch betätigbares Fahrzeuggetriebe, wie beispielsweise ein automatisiertes Schaltgetriebe oder ein Verteilergetriebe, gemäß dem Oberbegriff des Patentanspruchs 1. Solche Getriebe besitzen meist Schaltvorrichtungen, welche über einen Elektromotor betätigt werden.

Bei automatisierten oder automatischen Schaltgetrieben werden diese Elektromotoren üblicherweise von außen an das Getriebegehäuse angebracht. Ein solches Getriebe ist z.B. durch die DE 103 44 106 A1 bekannt. Dort wird ein Elektromotor gezeigt, welcher von außen an das Getriebegehäuse angeschraubt ist. Der Elektromotor treibt hier ein Zahnrad an, welches über einen Durchbruch in der Wand des Getriebegehäuses Durchgriff auf eine Schaltwelle besitzt. Bei solch einer Anordnung muss die Durchgriffsfläche natürlich aufwändig abgedichtet werden. Die Dichtstelle ist nämlich auch mechanische Schnittstelle zwischen Elektromotor und Getriebegehäuse, da der Motor dort über Schraubverbindungen mit dem Getriebegehäuse verbunden wird. Bei solchen Mehrfachfunktionen von Schnittstellen ist es technisch sehr aufwändig, alle Funktionen gleichermaßen zufrieden stellend zu gewährleisten. Zudem ist zu berücksichtigen, dass durch den außen am Getriebegehäuse angebrachten Elektromotor ein schwingfähiges Bauteil angebracht wird, welches bei einer Schwingungsanregung durch das Getriebe aufgrund von Resonanzüberhöhungen geschädigt werden kann. Natürlich ist der Elektromotor durch seine exponierte Lage auch starken Temperaturschwankungen ausgesetzt, da er durch seine Eigenerwärmung und den zusätzlichen Wärmeeinfluss durch das Getriebe eine Temperatur erreichen kann, die erheblich über der Temperatur von Umgebungsmedien wie z.B. Spritzwasser liegt. Durch ein Abschrecken durch die Umgebungsmedien treten an der Dichtfläche dann Druckdifferenzen auf, welche die Anforderungen an die Abdichtung der Schnittstelle weiter erhöhen.

Durch die DE 103 07 017 A1 ist weiterhin ein elektromechanisch betätigbares Verteilergetriebe bekannt, bei dem ein Elektromotor über eine Antriebswandlereinrichtung eine Kupplungseinrichtung betätigt.

Dort ist eine erste Abtriebswelle direkt mit einer Antriebswelle verbunden. Eine zweite Abtriebswelle ist über eine Kupplungseinrichtung mit der Antriebswelle verbindbar.

Die Kupplungseinrichtung ist dabei über einen Elektromotor betätigbar, wobei zwischen der Kupplungseinrichtung und dem Elektromotor eine Vorrichtung angeordnet ist, über welche eine rotatorische Bewegung des Elektromotors in eine translatorische Betäfigungsbewegung zum Ansteuern der Kupplungseinrichtung transformiert wird.

Der Elektromotor ist dabei mit einem eigenen Motorgehäuse ausgestattet und wird komplett vormontiert in das Getriebegehäuse eingesetzt. Das separate Motorgehäuse des Elektromotors wird dafür mit dem Getriebegehäuse drehfest verbunden. Durch das Einsetzen eines separaten Motorgehäuses ist auch hier eine mechanische Schnittstelle vorhanden, die technisch aufwändig realisiert werden muss. Damit wird auch eine Schwachstelle geschaffen, welche die Fehleranfälligkeit des Produkts erhöhen kann.

Aufgabe der Erfindung ist es ein elektromechanisch schaltbares Fahrzeuggetriebe zu realisieren, welches mit einer Schalteinrichtung ausgestattet ist, welche durch einen Elektromotor angetrieben wird. Dabei soll die Schnittstelle zwischen dem Elektromotor und dem Getriebe möglichst kostengünstig, robust und unanfällig gegenüber Fehlern ausgeführt werden.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einem elektromechanisch betätigbaren Fahrzeuggetriebe wie z.B. einem automatischen oder automatisierten Schaltgetriebe oder einem Verteilergetriebe. Das Getriebe besitzt dabei zumindest ein Getriebegehäuse, eine elektromechanische Schalteinrichtung und einen Elektromotor zum Antrieb der Schalteinrichtung. Erfindungsgemäß ist das Motorgehäuse des Elektromotors so ausgestaltet, dass es einem Teil des Getriebegehäuses entspricht und sich der Elektromotor im Innern des Getriebegehäuses befindet.

In einer vorteilhaften Ausbildung ist das Motorgehäuse mindestens eines Elektromotors so ausgebildet, dass es ein Teil des Getriebegehäuses bildet, welches separat montierbar ist. In dieser Ausbildung nimmt das Motorgehäuse des Elektromotors alle Einzelkomponenten des Elektromotors auf. So wird der komplett montierte Elektromotor in das Getriebegehäuse eingesetzt. Dabei dient ein Teil des Motorgehäuses gleichzeitig als Getriebedeckel zum Verschließen des Getriebegehäuses. Der Getriebedeckel entspricht also einem Teil der Außenwand des Getriebegehäuses. Der Elektromotor liegt vorteilhafter Weise innerhalb des Getriebegehäuses. Damit kann z. B. die Abstützung des Elektromotors mit dem Getriebegehäuse besonders großflächig erfolgen, was die mechanische Beanspruchung der Schnittstelle verringert. Da der Motor nicht aus dem Gehäuse ragt, kommt es auch nicht zu zusätzlichen Resonanzüberhöhungen bei Schwingungsanregungen des Getriebes. Durch die Integration des Elektromotors in das Getriebegehäuse wird auch die Wärmeabfuhr des Elektromotors verbessert.

In einer weiteren Ausbildung ist das Motorgehäuse einstückig mit dem Getriebegehäuse ausgebildet und ebenso innerhalb des Getriebegehäuses angeordnet. Das bedeutet, dass der Elektromotor kein separates Motorgehäuse benötigt, sondern ein Teil des Getriebegehäuses als Motorgehäuse dient, welches die Einzelkomponenten des Elektromotors aufnimmt. Der Elektromotor wird also nicht mehr vor dem Einbau in das Getriebe zusammengesetzt. Stattdessen werden die Einzelkomponenten des Elektromotors erst durch die Montage in das Getriebegehäuse zu einem funktionstüchtigen Elektromotor zusammengefügt. In einer weiteren Ausbildung kann auch ein Teil eines solchen Elektromotors mit einem Deckel verschlossen werden.

Als Elektromotor wird vorzugsweise ein Drehstrommotor, beispielsweise ein Asynchronmotor verwendet. Asynchronmotoren können vorteilhafter Weise auch offen in einem Öl gefüllten Raum betrieben werden. Wird der Elektromotor mit Öl durchspült wird, verbessert sich die Kühlung wesentlich. Deswegen ist das Motorgehäuse des Elektromotors in einer weiteren Ausgestaltung teilweise durchbrochen ausgeführt.

Die Erfindung lässt sich anhand eines Ausführungsbeispiels weiter erläutern. Dazu ist der Beschreibung eine Zeichnung beigefügt. In dieser zeigt:
Fig. 1 eine schematische Darstellung der Erfindung,
Fig. 2 eine weitere schematische Darstellung der Erfindung und
Fig. 3 eine weitere Ausführungsform der Erfindung.

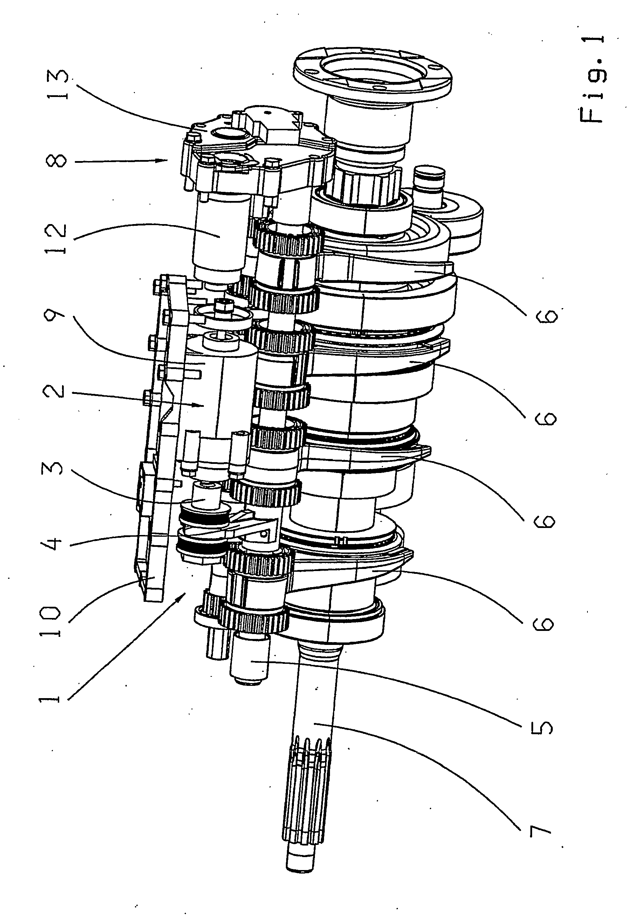

Fig. 1 zeigt eine schematische Darstellung eines erfindungsgemäßen Getriebes. Eine elektromechanische Schalteinrichtung 1 ist durch einen Elektromotor 2, einer Motorwelle 3 und einem Übertragungsglied 4 gegeben. Dabei ist der Elektromotor 2 über die Motorwelle 3 und dem Übertragungsglied 4 mit einer Schaltwelle 5 verbunden. Mit der Schaltwelle 5 sind weitere Übertragungsglieder 6 verbunden, über welche auf einer Getriebewelle 7 vorher gewählte Gangstufen einlegbar sind. Die gewünschten Gangstufen werden über einen Wählmotor 8 ausgewählt.

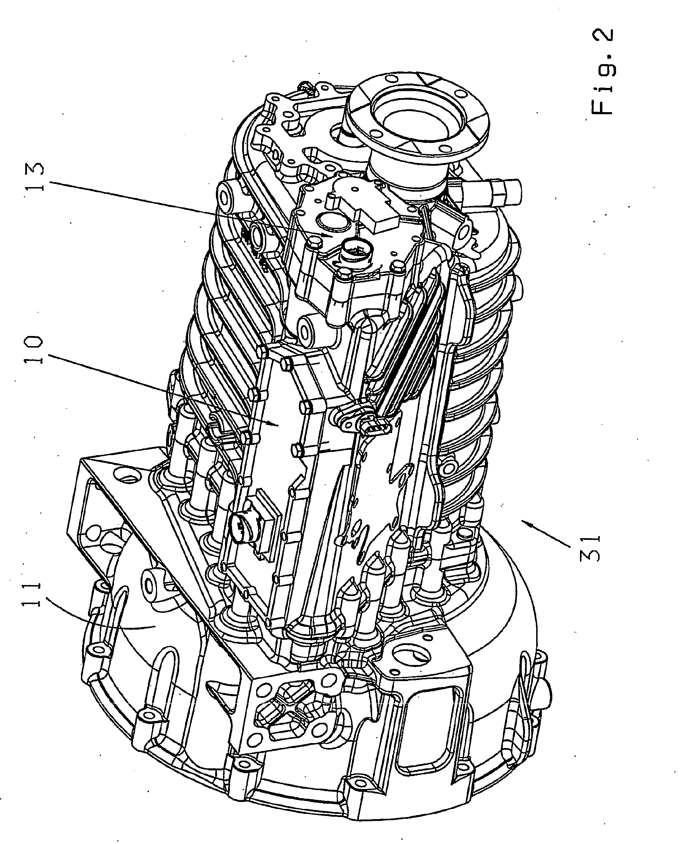

Der Elektromotor 2 besitzt ein erstes Motorgehäuse 9, welches einstückig mit einem ersten Getriebedeckel 10 gefertigt ist. Der erste Getriebedeckel 10 ist mit einem in Fig. 2 dargestellten Getriebegehäuse 11 verbindbar und bildet einen Teil der Außenwand des Getriebegehäuses 11. Die Einzelkomponenten des Elektromotors 2 werden vor dem Einsatz in das Getriebegehäuse 11 in das Motorgehäuse 9 eingesetzt. Die Motorwelle 3 des Elektromotors 2 trägt ein Gewinde einer Kugelspindel. Dadurch wird das Übertragungsglied 4 vom Elektromotor 2 direkt axial verschoben. Durch die axiale Bewegung des Übertragungsgliedes 4 wird daraufhin die Schaltwelle 5 axial bewegt. Mit der Schaltwelle 5 sind weitere Übertragungsglieder 6 verbunden, mit welchen vorher gewählte Gangstufen an der Getriebewelle 7 einlegbar sind. Die Gangstufen werden durch einen zweiten Elektromotor, dem Wählmotor 8 ausgewählt.

Der Wählmotor 8 besitzt ein zweites Motorgehäuse 12, welches auch ein Teil des Getriebegehäuses 11 darstellt, mit dem Getriebegehäuse 11 aber einstückig gefertigt ist. Die Einzelkomponenten des Wählmotors 8 werden also direkt in das zweite Motorgehäuse 12 montiert. Der Wählmotor 8 wird erst durch die Montage der Einzelkomponenten in das zweite Motorgehäuse12 zu einem funktionstüchtigen Antrieb. Nach der Montage der Einzelkomponenten wird das Getriebegehäuse 11 durch einen zweiten Getriebedeckel 13 verschlossen.

In Fig. 2 ist ein geschlossenes Getriebegehäuse 11 dargestellt. Dort sind der erste und zweite Getriebedeckel 10, 13 in fertig montiertem Zustand zu erkennen. Bei dem ersten Getriebedeckel 10 ist deutlich zu sehen, dass eine großflächige Abstützung vorhanden ist. Dies wird durch die einstückige Bauform des Motorgehäuses 9 mit dem Deckel 10 ermöglicht. Dadurch wird die Beanspruchung der mechanischen Schnittstelle und auch der Dichtfläche zwischen Elektromotor 2 und dem Getriebegehäuse 11 stark verringert. Von dem zweiten Getriebedeckel 13 wird schließlich hauptsächlich eine Dichtfunktion übernommen. Die Beanspruchung des zweiten Getriebedeckels 13 ist also vor allem durch die Abdichtung gegen die Umwelt bedingt.

Durch das Verringern der Beanspruchungen können die o. g. Schnitt- bzw. Dichtstellen einfacher und kostengünstiger dargestellt werden. Außerdem wird durch die erfindungsgemäße Einbettung der Motoren 2, 8 in das Getriebegehäuse 11 die Wärmekapazität des Umfeldes der Elektromotoren 2, 8 vergrößert. Dadurch sinken die Temperaturgradienten z.B. bei der Beaufschlagung der Getriebedeckel 10, 13 durch Kontakt mit Spritzwasser. Insgesamt kann durch die Einbettung des Elektromotors 2, 8 in das Getriebegehäuse die Eigenwärme der Motoren 2, 8 bestmöglich abgegeben werden.

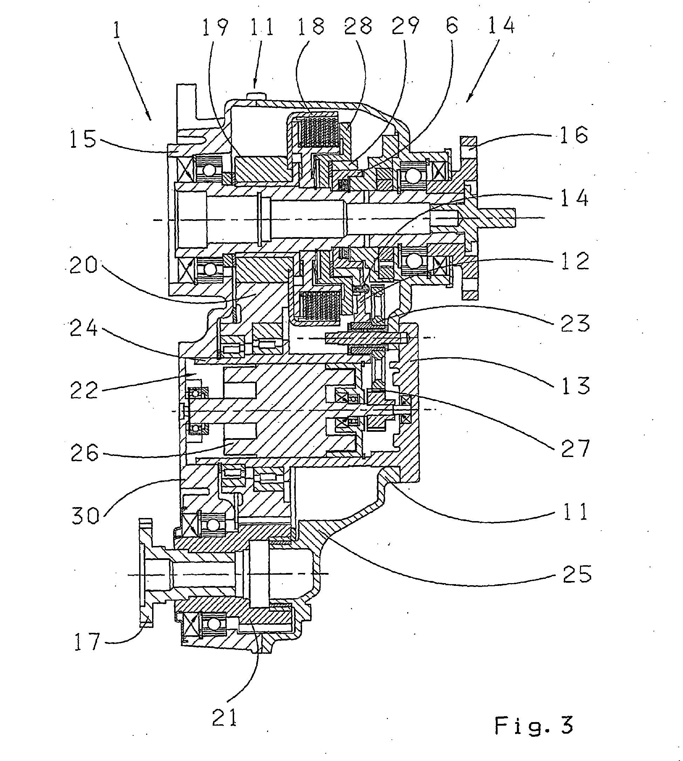

Fig. 3 stellt eine weitere Darstellung einer erfindungsgemäßen Lösung dar. Sie zeigt eine Teilschnittdarstellung eines Verteilergetriebes 14 mit einer dritten Übertragungseinrichtung 23, einem dritten Elektromotor 22 und einer Kupplungseinrichtung 18 zum Zuschalten einer zweiten Abtriebswelle. Eine Schalteinrichtung 1 wird hier durch den dritten Elektromotor 22 und dem dritten Übertragungsglied 23 gebildet.

In Fig. 3 ist ein als Längsverteilergetriebe ausgeführtes Verteilergetriebe 14 eines Kraftfahrzeuges in einem Längsschnitt dargestellt, mittels welchem ein über eine Antriebswelle 15 eingehendes Antriebsmoment auf zwei Abtriebswellen führbar ist, wobei von den beiden Abtriebswellen jeweils nur die beiden Anschlussflansche 16, 17 dargestellt sind, an welchen die Abtriebswellen angeflanscht sind. Nachfolgend werden die beiden Anschlussflansche 16, 17 bei der Beschreibung der Funktionsweise des Verteilergetriebes 14 mit den Abtriebswellen gleichgesetzt, so dass die Bezugszeichen der beiden An schlussflansche für die beiden nicht dargestellten Abtriebswellen verwendet werden.

Die erste Abtriebswelle 16 ist direkt mit der Antriebswelle 15 verbunden, so dass das Antriebsmoment direkt von der Antriebswelle 15 auf die erste Abtriebswelle 16 geführt wird. Die zweite Abtriebswelle 17 ist über eine Kupplungseinrichtung 18, ein auf der Antriebswelle 15 gelagertes erstes Zahnrad 19, ein Zwischenrad 20 und ein zweites Zahnrad 21 mit der Antriebswelle 15 verbunden, wenn die Kupplungseinrichtung 18 sich in einem Zustand befindet, in welchem über die Kupplungseinrichtung 18 ein Drehmoment führbar ist.

Die Kupplungseinrichtung 18 ist über den dritten Elektromotor 22 betätigbar, wobei zwischen der Kupplungseinrichtung 18 und dem dritten Elektromotor 22 eine dritte Übertragungseinrichtung 23 angeordnet ist, über welche eine rotatorische Bewegung des dritten Elektromotors 22 in eine translatorische Betätigungsbewegung zum Ansteuern der Kupplungseinrichtung 18 gewandelt wird. Ein drittes Motorgehäuse 24 des dritten Elektromotors 22 ist dabei einstückig mit dem ersten Teil 25 des Getriebegehäuses 11 gefertigt. Die Einzelkomponenten des dritten Elektromotors 22, wie beispielsweise der Rotor 26 werden erfindungsgemäß in das dritte Motorgehäuse 24 eingesetzt, bevor die beiden Hälften 25,30 des Getriebegehäuses 11 zusammengesetzt werden.

Das dritte Übertragungsglied 23 weist eine Übersetzungsstufe 27 auf, welche vorliegend als Stimradstufe ausgeführt ist. Die Kupplungseinrichtung 18 ist mit einer Druckscheibe 28 ausgeführt, welche drehfest mit der Antriebswelle 15 verbunden ist und somit im Betrieb des Verteilergetriebes 14 mit derselben Drehzahl wie die Antriebswelle 15 rotiert. Eine Spindelmutter 29 der Übertragungseinrichtung 23 wird bei einem Schließvorgang der Kupplungseinrichtung 18 in Richtung der Druckscheibe 28, d.h. in axialer Richtung der Antriebswelle 15, bewegt, so dass sich Reibungskräfte zwischen der Druckscheibe 28 und der Spindelmutter 29 mit zunehmendem Verstellweg der Spindelmutter 29 erhöhen und dadurch ein Drehmoment übertragbar ist.

Das Zwischenrad 20 ist vorliegen auf dem dritten Motorgehäuse 24 des dritten Elektromotors 22 drehbar gelagert. Die Anordnung des dritten Elektromotors 22 innerhalb des Zwischenrads 20 stellt eine äußerst kompakte und Platz sparende Bauweise des Verteilergetriebes 14 dar, wodurch im Vergleich zu außerhalb des Gehäuses des Verteilergetriebes angeordnete Elektromotoren einen erheblich geringeren Bauraumbedarf in einem Kraftfahrzeug benötigen.

Bei einer vorteilhaften Ausgestaltung des Elektromotors 22 als Drehfeldmotor bietet die Möglichkeit, den dritten Elektromotor 22 im Vergleich zu einer Ausführung als Gleichstrommotor kleiner zu dimensionieren, da Drehfeldmotoren im Vergleich zu Gleichstrommotoren bei gleichen Abmessungen eine höhere Leistungsabgabe aufweisen. Dies führt insbesondere in Kombination mit der vorbeschriebenen Ausführung, dass der Elektromotor 22 bzw. der Drehfeldmotor wesentlich kleiner dimensioniert werden kann als ein Gleichstrommotor eines bekannten Verteilergetriebes.

Darüber hinaus besteht die Möglichkeit, alle drei Motorgehäuse 9, 12, 24 zumindest teilweise durchbrochen auszuführen. Dadurch kann bei der Verwendung eines Asynchronmotors als Elektromotor 2, 8, 22 das Motorgehäuse 9,12,24 mit Öl durchspült werden. Dadurch wird eine optimierte Kühlung des Elektromotors ermöglicht.

Es ist auch vorstellbar, dass das erste Motorgehäuse 9 des ersten Elektromotors 2 einstückig mit dem Getriebegehäuse 11 gefertigt wird, wie auch das zweite oder dritte Motorgehäuse 12, 24 einstückig mit einem Getriebedeckel 10 hergestellt werden kann.

### Bezugszeichen

- 1: Schalt-/Wähleinrichtung
- 2: erster Elektromotor
- 3: Motorwelle
- 4: erstes Übertragungsglied
- 5: Schaltwelle
- 6: zweites Übertragungsglied
- 7: Getriebewelle
- 8: Wählmotor
- 9: erstes Motorgehäuse
- 10: erster Getriebedeckel
- 11: Getriebegehäuse
- 12: zweites Motorgehäuse
- 13: zweiter Getriebedeckel
- 14: Verteilergetriebe
- 15: Antriebswelle
- 16: erste Abtriebswelle, Anschlussflansch
- 17: zweite Abtriebswelle, Anschlussflansch
- 18: Kupplungseinrichtung
- 19: erstes Zahnrad
- 20: Zwischenrad
- 21: zweites Zahnrad
- 22: dritter Elektromotor
- 23: drittes Übetragungsglied
- 24: drittes Motorgehäuse
- 25: erster Teil des Getriebegehäuses 11
- 26: Rotor
- 27: Übersetzungsstufe
- 28: Druckscheibe
- 29: Spindelmutter.
- 30: zweiter Teil des Getriebegehäuses 11
- 31: Getriebe

## Patentansprüche

1. Elektromechanisch betätigbares Fahrzeuggetriebe, beispielsweise ein automatisiertes Schaltgetriebe oder ein Verteilergetriebe, mit zumindest einem Getriebegehäuse, einer elektromagnetischen Schalt- oder Wählvorrichtung und einem Elektromotor, mit welchem die Schalt- oder Wählvorrichtung betätigbar ist, **dadurch gekennzeichnet, dass** ein Elektromotor (2, 8, 22) einer Schalt- oder Wählvorrichtung (1) innerhalb eines Getriebegehäuses (11) angeordnet ist und ein Motorgehäuse (9,12,24) des Elektromotors (2, 8, 22) so ausgeformt ist, dass es einem Teil des Getriebegehäuses (11) entspricht.

2. Fahrzeuggetriebe nach Anspruch eins, **dadurch gekennzeichnet, dass** das Motorgehäuse (9) des Elektromotors (2) so ausgeformt ist, dass es einem separat montierbaren Getriebedeckel (10) des Getriebegehäuses (11) entspricht.

3. Fahrzeuggetriebe nach Anspruch eins, **dadurch gekennzeichnet, dass** das Motorgehäuse (12, 24) des Elektromotors (8, 22) einstückig mit dem Getriebegehäuse (11, 25) ausgebildet ist.

4. Fahrzeuggetriebe nach einem der vorherigen Ansprüche, **dadurch gekennzeichnet, dass** der Elektromotor (2, 8, 22) einem Drehstrommotor, vorzugsweise einem Asynchronmotor entspricht.

5. Fahrzeuggetriebe nach Anspruch 4, **dadurch gekennzeichnet, dass** das Motorgehäuse (9,12, 24) des Elektromotors (2, 8, 22) zumindest teilweise durchbrochen ist und zur Kühlung des Elektromotors (2, 8, 22) von Getriebeöl durchspülbar ist.

6. Fahrzeuggetriebe nach einem der vorherigen Ansprüche 1, 2, 4 oder 5, **dadurch gekennzeichnet, dass** der erste Elektromotor (2) eine Motorwelle (3) besitzt, welche als Kugelspindel ausgestaltet ist und direkt - eine erste Übertragungsvorrichtung (4) axial verschiebt, mit der wiederum eine Schaltwelle (5) axial verschoben wird und auf welcher zweite Übertragungsvorrichtungen (6), wie beispielsweise Schaltgabeln angebracht sind, welche zum ein- oder auslegen von Gangstufen dienen.

7. Fahrzeuggetriebe nach Anspruch 3 bis 5, **dadurch gekennzeichnet, dass** es einem Verteilergetriebe (14) entspricht, welches mit einer regelbaren Kupplungseinrichtung (18), zum Verteilen eines über eine Antriebswelle (15) eingehenden Antriebsmomentes auf wenigstens zwei Abtriebswellen (16, 17), ausgestattet ist, wobei eine zweite Abtriebswelle (17) über die Kupplungseinrichtung (18) mit der Antriebswelle (15) verbindbar ist und die Kupplungseinrichtung (18) über den dritten Antriebsmotor (22) und eine zwischen dem Antriebsmotor (9) und der Kupplungseinrichtung (5) angeordneten dritten Übertragungseinrichtung (23) zum Wandeln einer rotatorischen Bewegung des dritten Elektromotors (22) in eine translatorische Betätigungsbewegung für die Kupplungseinrichtung (18) betätigbar ist und ein Zwischenrad (20) auf der Außenseite des dritten Motorgehäuses (24) angeordnet ist.

## Claims

1. Electromechanically operated vehicle transmission, for example an automated change-speed transmission or a power divider, having at least one transmission housing, an electromagnetic shifting or selecting apparatus, and an electric motor with which the shifting or selecting apparatus can be operated, **characterized in that** an electric motor (2, 8, 22) of a shifting or selecting apparatus (1) is arranged within a transmission housing (11), and a motor housing (9, 12, 24) of the electric motor (2, 8, 22) is shaped such that it corresponds to a part of the transmission housing (11).

2. Vehicle transmission according to Claim 1,
**characterized in that** the motor housing (9) of the electric motor (2) is shaped such that it corresponds to a transmission cover (10) of the transmission housing (11), which transmission cover (10) can be fitted separately.

3. Vehicle transmission according to Claim 1,
**characterized in that** the motor housing (12, 24) of the electric motor (8, 22) is integrally formed with the transmission housing (11, 25).

4. Vehicle transmission according to one of the preceding claims, **characterized in that** the electric motor (2, 8, 22) corresponds to a three-phase motor, preferably an asynchronous motor.

5. Vehicle transmission according to Claim 4,
**characterized in that** the motor housing (9, 12, 24) of the electric motor (2, 8, 22) is at least partly perforated, and transmission oil can wash through the said motor housing for the purpose of cooling the electric motor (2, 8, 22).

6. Vehicle transmission according to one of the preceding Claims 1, 2, 4 and 5, **characterized in that** the first electric motor (2) has a motor shaft (3) which is configured as a ball screw and directly axially displaces a first transmission apparatus (4) with which, in turn, a shifting shaft (5) is axially displaced and on which second transmission apparatuses (6), for example shifting forks, which serve to engage or disengage gear ratios are mounted.

7. Vehicle transmission according to Claims 3 to 5, **characterized in that** it corresponds to a power divider (14), which is equipped with a controllable clutch device (18), for distributing a drive torque, which is input via a drive shaft (15), to at least two output drive shafts (16, 17), it being possible to connect a second output drive shaft (17) to the drive shaft (15) via the clutch device (18), and it being possible to operate the clutch device (18) via the third drive motor (22) and a third transmission device (23), which is arranged between the drive motor (9) and the clutch device (5), in order to convert a rotary movement of the third electric motor (22) into a translatory operating movement for the clutch device (18), and an intermediate gear (20) being arranged on the outside of the third motor housing (24).

## Revendications

1. Boîte de vitesses de véhicule pouvant être actionnée de façon électromécanique, par exemple une boîte de vitesses manuelle automatisée ou une boîte de transfert, avec au moins un carter de boîte de vitesses, un dispositif de sélection ou de changement de vitesse électromagnétique et un moteur électrique avec lequel le dispositif de changement de vitesse ou de sélection peut être actionné, **caractérisée en ce qu'**un moteur électrique (2, 8, 22) d'un dispositif de changement de vitesse ou de sélection (1) est disposé à l'intérieur d'un carter de boîte de vitesses (11) et un carter de moteur (9, 12, 24) du moteur électrique (2, 8, 22) est réalisé de telle sorte qu'il correspond à une partie du carter de boîte de vitesses (11).

2. Boîte de vitesses de véhicule selon la revendication 1, **caractérisée en ce que** le carter de moteur (9) du moteur électrique (2) est réalisé de telle sorte qu'il correspond à un cache de boîte de vitesses (10) du carter de boîte de vitesses (11) pouvant être monté séparément.

3. Boîte de vitesses de véhicule selon la revendication 1, **caractérisée en ce que** le carter de moteur (12, 24) du moteur électrique (8, 22) est réalisé en une seule pièce avec le carter de boîte de vitesses (11, 25).

4. Boîte de vitesses de véhicule selon l'une quelconque des revendications précédentes, **caractérisée en ce que** le moteur électrique (2, 8, 22) correspond à un moteur triphasé, de préférence un moteur asynchrone.

5. Boîte de vitesses de véhicule selon la revendication 4, **caractérisée en ce que** le carter de moteur (9, 12, 24) du moteur électrique (2, 8, 22) est interrompu au moins en partie et peut être arrosé d'huile de boîte de vitesses pour refroidir le moteur électrique (2, 8, 22).

6. Boîte de vitesses de véhicule selon l'une quelconque des revendications précédentes 1, 2, 4 ou 5, **caractérisée en ce que** le premier moteur électrique (2) possède un arbre de moteur (3) équipé d'un pivot sphérique et déplaçant directement dans le plan axial un premier dispositif de transmission (4) avec lequel un arbre de changement de vitesse (5) est déplacé à son tour et sur lequel des deuxièmes dispositifs de transmission (6), tels que par exemple des fourches de changement de vitesse, sont disposés et servant à mettre ou à retirer des rapports.

7. Boîte de vitesses de véhicule selon l'une quelconque des revendications 3 à 5, **caractérisée en ce qu'**elle correspond à une boîte de transfert (14) qui est équipée d'un dispositif d'embrayage (18) réglable, pour répartir un couple d'entraînement arrivant par l'intermédiaire d'un arbre d'entraînement (15) sur au moins deux arbres d'entraînement de sortie (16, 17), un deuxième arbre d'entraînement de sortie (17) pouvant être relié à l'arbre d'entraînement (15) par l'intermédiaire d'un dispositif d'embrayage (18) et le dispositif d'embrayage (18) pouvant être actionné par l'intermédiaire du troisième moteur d'entraînement (22) et d'un dispositif de transmission (23) disposé entre le moteur d'entraînement (9) et le dispositif d'embrayage (5) pour transformer un mouvement de rotation du troisième moteur électrique (22) en mouvement d'actionnement translatoire pour le dispositif d'embrayage (18) et une roue intermédiaire (20) étant disposée sur le côté extérieur du troisième carter de moteur (24).
